Europäisches Patentamt

(19) European Patent Office

Office européen des brevets

(11) Publication number: **0 081 018**

**A1**

# (12) EUROPEAN PATENT APPLICATION

(21) Application number: **81305775.9**

(22) Date of filing: **07.12.81**

(51) Int. Cl.³: **G 01 D 13/24**

(43) Date of publication of application:
**15.06.83** Bulletin **83/24**

(84) Designated Contracting States:
**CH DE FR GB IT LI**

(71) Applicant: **WARBURTON O'DONNEL LIMITED**
**372 Eastern Valley Way**
**Chatswood New South Wales 2067(AU)**

(72) Inventor: **Richardson, Douglas**
**Ashley Street**
**Hornsby New South Wales 2077(AU)**

(74) Representative: **Dixon, Donald Cossar et al,**
**Gee & Co. Chancery House Chancery Lane**
**London WC2 1QU(GB)**

(54) Improved damped idle pointer assembly.

(57) An idle pointer assembly for a maximum demand indicator (6) comprising a housing (8) attachable to the body (5) of the indicator and supporting a spindle (11) carrying a hub (14A) and pointer arm (14) rotatable on the spindle axis, said hub and said housing supporting confronting frictional surfaces which are maintained in contact by a rotational movement of said pointer arm.

FIG.1

EP 0 081 018 A1

"IMPROVED DAMPED IDLE POINTER ASSEMBLY"

This invention relates to damped idle pointer assemblies such as utilized on indicating instruments, for example those of a "maximum reading" type such as maximum demand indicators. The invention, however, is not necessarily confined thereto.

These instruments are characterised by an "active" or "indicating" pointer which performs the functions of indicating the magnitude or value of measurement and of pushing the "idle" pointer up the scale where it remains to show the highest value which has been reached over a given period. At the end of this period, the idle pointer is reset either to zero, or to the position of the active pointer, ready for the next indicating period. The product under measurement may be any physical or measurable quantity, such as water flow or volume, gaseous or liquid pressure, electrical functions such as voltage, current or energy.

Fundamental requirements of an idle pointer assembly are:-

1) It does not impose a significant loading (i.e. cause inaccuracy) of the active pointer.

2) It must possess sufficient friction to remain at the setting where it has been left by the active pointer.

3) It should not be affected by external conditions such as temperature, moisture, vibrations or magnetic fields.

4. It should be a simple practical assembly, which will function indefinitely without maintenance.

This damping effect has been achieved in the past by various methods, such as friction derived from the movement of silk thread over a drum, or a moving and fixed plate-clutch arrangement with silicone grease between the plates to provide damping or by a wide variation of systems using spring pressure derived from coil springs, spring clips, leaf springs and the like. These forms of assemblies are either expensive, or give unreliable results due to the requirement for regular adjustment with changing ambient conditions and with age. Furthermore, in all of these instances careful machining of components in production is necessary.

The principal object of the invention, therefore, is to provide a damped idle pointer which substantially avoids the above-noted defects and yet is of simple and cheap construction.

In accordance with one general form of the invention there is provided a damped idle pointer assembly comprising a mounting member for attachement to the body of an instrument, a spindle supported on said member, a pointer arm on said spindle and having a hub rotatable about the axis of said spindle, two frictionally coacting surfaces respectively supported relative to said pointer arm and said mounting member, and magnetic means the flux of which acts upon at least one of said surfaces to effect mutual engagement of said surfaces and through their surface friction to dampen rotational movement of said pointer arm.

The invention will be better understood from the following description with reference to the accompanying drawings, in which:-

Fig. 1 is a front view of a typical maximum demand indicator incorporating an idle pointer assembly according tothis invention;

Fig. 2 is a fragmentary sectional view on the line II-II of Fig. 1, and,

Fig. 3 is a similar view to Fig. 2 of a second embodiment of the invention.

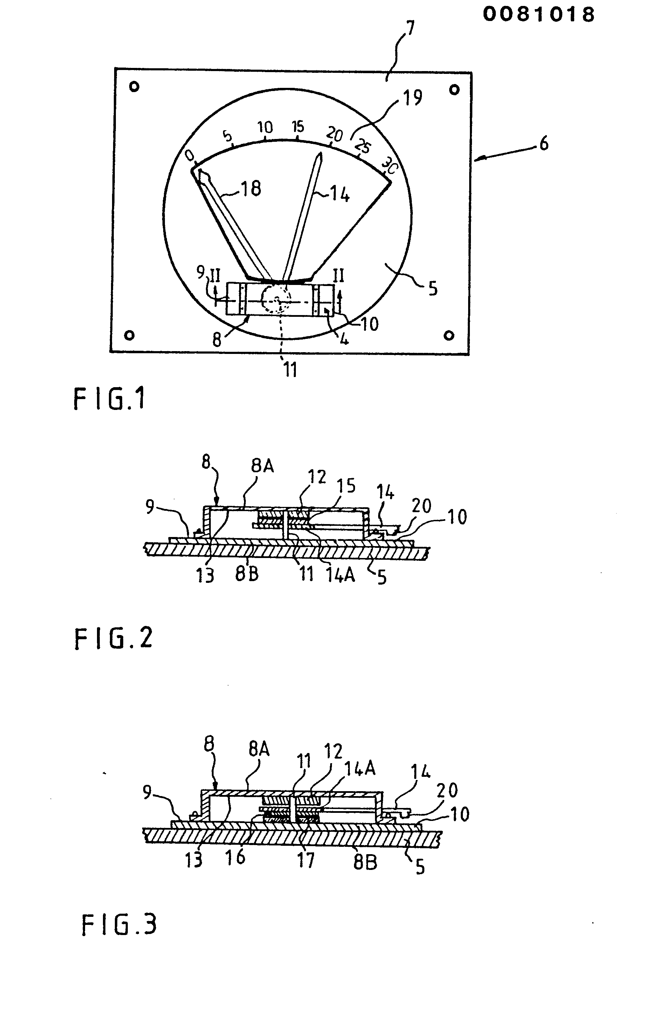

The invention will now be described with reference to Figs. 1 and 2 wherein the idle pointer assembly 4 is designed for installation upon the frame body 5 of a maximum demand indicator 6. It will be obvious from an understanding of the following description that the principle of this invention may have different applications not necessarily for the damping of the idle pointer arms of measuring instruments. However, it is a characteristic of maximum demand indicators that once sealed within an enclosing casing 7 are not attended thereafter for long periods of time, excepting for regular resetting. It is of importance that idle pointer assemblies such as 4 attched to such indicators 6 be sufficiently damped in their movement to safeguard against changes in their indexation due to vibration of any kind experienced by the indicator itself.

The assembly 4 of this invention consists of a housing 8 composed of two spaced confronting plates 8A and 8B riveted or otherwise secured together so that the housing is hollow and open-sided. The housing 8 is secured by its opposite ends 9 and 10 to the frame body 5 of the maximum demand indicator 6 by adhesive or any suitable means. Instead of utilizing a housing 8 whereby the assembly may be supplied as an accessory to an indicating instrument 6, the housing 8 may be provided only as the supporting plate 8A with the frame body 5 serving as the other confronting plate 8B.

An upright spindle 11 extends between the mid points of the confronting plates 8A and 8B and a small disc-shaped permanent magnet 12 provided with a central bore encircles one end of the spindle 11. The supporting plate 8A is preferably composed of magnetic material whereby the magnet 12 by its own magnetic attraction is held firmly against an inner face 13 of the supporting plate 8A.

A pointer arm 14 is provided with a hub 14A having a hole at its centre and located over the spindle 11 to one side of the permanent magnet 12. A bearing plate 15 of polished metal, or other magnetic material may be fixed to the pointer arm 14 about the hole therein so as to confront one surface of the magnet 12. The bearing plate 15 and the pointer arm hub 14A, therefore, will be attracted by the permanent magnet 12 so that the confronting faces of the magnet 12 and the bearing plate 15 function as frictionally coacting surfaces. It will be appreciated that any rotational movement of the pointer arm 14 about the axis of the spindle 11 will be damped by the friction existing between the said surfaces. The degree of damping will be a measure of the flux of the permanent magnet 12 and the area of the coacting surfaces. In designing such an assembly it is also feasible to introduce shims (not shown) between the permanent magnet 12 and its associated supporting plate 8A. Furthermore, as the assembly of pointer arm 14, magnet 12 and spindle 11 is virtually held together by the magnetic flux in the magnet 12, production and assembly tolerances between components is far from stringent.

It will be apparent that the positions of the bearing plate 15 and the permanent magnet 12 may be interchanged so that the latter is carried upon the pointer arm hub 14A while the former is incorporated in the supporting plate 8A. Another alternative, as shown in Fig. 3, is for the surface friction between coacting surfaces to be derived by magnetic repulsion as opposed to magnetic attraction as already described. In such an instance two bearing plates 16 and 17 confronting each other on the opposite side of the pointer arm hub 14A from the permanent magnet 12 may be included. Preferably, the bearing plate 16 carried by the pointer arm hub 14A in such an instance will be of magnetised material so that a like pole thereof confronts the adjacent pole of the permanent magnet 12. The two bearing plates 16 and 17 will therefore be forced together against the plate 6B for frictional engagement by the magnetic repulsion between the magnet 12 and the plate 16.

In the operation of the instrument 6, shown purely for illustrative reasons as an electrical meter, the indicator 18 will sweep over the calibrated scale 19 according to the electrical value being monitored and if a value above 18 on the scale is registered the indicator 18, which underlies the pointer 14 will engage the tab 20 on pointer 14 and carry the latter up the scale against the friction created between the coacting surfaces on the magnet 12 and bearing plate 15, or between the two bearing plates 16 and 17 of Fig. 3. When the indicator returns to a lower value the pointer 14 will remain steady to record the maximum peak value registered.

A preferred embodiment and several obvious modifications have been described in the foregoing passages but it should be understood that other forms and embodiments are possible within the scope of this invention.

## CLAIMS

1. A damped idle pointer assembly comprising a housing (8), a spindle (11) supported in said housing, a pointer arm (14) on said spindle and having a hub (14A) rotatable about the axis of said spindle, said assembly being characterized by two frictionally coacting surfaces respectively supported relative to said pointer arm and said housing, and magnetic means (12) the flux of which acts upon at least one of said surfaces to effect mutual engagement of said surfaces and through their surface friction to dampen rotational movement of said pointer arm.

2. A damped idle pointer assembly according to claim 1, characterized in that said magnetic means is a permanent magnet (12) encircling said spindle (11), and said spindle is supported between two spaced confronting parts (8A and 8B) of the housing.

3. A damped idle pointer assembly according to claim 1 or 2, characterized in that one of said frictionally coacting surfaces is provided upon a face of the magnetic means and the other of said frictionally coacting surfaces is of magnetic material and provided upon the hub of said pointer arm or upon said housing, whereby frictional engagement between said surfaces is effected by magnetic attraction.

4. A damped idle pointer assembly according to claim 3, characterized in that said magnetic means is retained against said housing when said other frictionally coacting surface is on said pointer hub, or is retained against said pointer hub when said other frictionally coacting surface is on said housing.

5. A damped idle pointer assembly according to claim 2, characterized in that one of said frictionally coacting surfaces is of magnetized material and provided upon the hub of said pointer arm and the other of said frictionally coacting surfaces is provided upon one of said confronting parts of the housing, and said magnet is retained against the other confronting part of said housing, the confronting poles of the magnet and the magnetized material being opposed whereby frictional engagement between said surfaces is effected by magnetic repulsion.

6.   A maximum demand indicating instrument comprising a frame body (5) supporting an indication scale (19) an indicator (18) movable up and down said scale, means for moving said indicator for measurement of an applied signal, and an idle pointer assembly supported upon said body and having a pointer arm (14) engageable by said indicator to be moved by it up said scale and being frictionally damped in its movement to retain its displaced position until advanced further up said scale by said indicator, said idle pointer assembly being characterized by a housing (8) attached to said frame body, a spindle supported upright by said housing with respect to said frame body and carrying said pointer arm by a hub portion (14A) thereof, a permanent magnet (12) on said spindle, and two frictionally coacting surfaces one of which is of magnetic material and provided on said pointer arm hub portion, whereby said frictional damping of said pointer arm is derived by engagement of said frictionally coacting surfaces through magnetic flux from said magnet.

7.   A damped idle pointer assembly substantially as hereinbefore described with reference to Figs. 1 and 2, or Figs. 1 and 3 of the accompanying drawings.

8.   A maximum demand indicating instrument substantially as hereinbefore described with reference to Figs. 1 and 2, or Figs. 1 and 3 of the accompanying drawings.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 996 881 (SCHNEIDER) *Abstract; figures; column 3, line 4 to line 60* | 1-8 | G 01 D 13/24 |
| X | GB-A-2 040 050 (MORGAN) *Abstract; figures* | 1,3-8 | |

TECHNICAL FIELDS
SEARCHED (Int. Cl. ³)

G 01 D 13

The present search report has been drawn up for all claims

| Place of search THE HAGUE | Date of completion of the search 16-08-1982 | Examiner LLOYD P.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82